# EUROPÄISCHE PATENTSCHRIFT

(11) **EP 3 165 193 B1**
(45) Veröffentlichungstag und Bekanntmachung des Hinweises auf die Patenterteilung: **15.07.2020**
(21) Anmeldenummer: 15193647.3
(22) Anmeldetag: 09.11.2015
(51) Int. Cl.: A61C 3/08, A61C 3/00

(54) **DENTAL-HANDWERKZEUG**
HANDHELD DENTAL TOOL
INSTRUMENT DENTAIRE MANUEL

(43) Veröffentlichungstag der Anmeldung: 10.05.2017
(73) Patentinhaber: Ivoclar Vivadent AG, 9494 Schaan (LI)
(72) Erfinder: Müller, Frank, 6800 Feldkirch (AT); Walther, Nora Christina, 9463 Oberriet (CH)
(74) Vertreter: Baronetzky, Klaus

(56) Entgegenhaltungen:
- DE-A1- 10 208 957
- DE-U1- 8 418 590
- DE-U1- 29 801 831
- JP-U- S49 134 896
- US-A- 1 209 789
- US-A1- 2009 130 628

## Beschreibung

Die Erfindung betrifft ein Dental-Handwerkzeug, gemäß dem Oberbegriff von Anspruch 1.

Dental-Handwerkzeuge, die auch als dentale Handinstrumente bezeichnet werden, sind seit langem bekannt. Derartige Handwerkzeuge sind entweder einstückig oder weisen auswechselbare Spitzen, beispielsweise Modellierspitzen auf. Die Spitzen sind typischerweise abgekröpft, beispielsweise nach der Art von Schwanenhälsen, um dem Zahnarzt die Bearbeitung auch an Stellen zu ermöglichen, die von der Mundöffnung des Patienten abgewandt sind, also an distalen Bereichen von Zähnen beziehungsweise in Zahnzwischenräumen von Molaren.

Es ist seit langem bekannt, dass man durch unterschiedlich abgekröpfte Spitzen die Handhabbarkeit verbessern kann, wobei es auch bekannt ist, Spitzen zu verschiedenen Zwecken zu realisieren, also beispielsweise Löffelspitzen, Spatenspitzen, Spitzen zum Feilen und dergleichen, zur Verfügung zu stellen, um den unterschiedlichen erforderlichen Bearbeitungsvorgängen durch den Zahnarzt Rechnung zu tragen. US20090130628A1 offenbart ein Dental-Handgerät mit den Merkmalen des Oberbegriffs des Anspruchs 1. Es versteht sich, dass die Spitze auch bei Ausübung von Druck nicht im Mund des Patienten verloren gehen darf (Erstickungsgefahr). Zudem ist es häufig erwünscht, einen erheblichen Druck ausüben zu können, so dass eine sichere Führung der Spitze über ein Kupplungsglied bevorzugt ist.

Ein Beispiel für eine derartige Lösung aus noch relativ neuerer Zeit ist aus der US 4 552 531 A1 ersichtlich. Bei dieser Lösung ist die Spitze durch Reibung in einem Sackloch gehalten, das endseitig eines Anschlussteils des Dental-Handwerkzeugs als Kupplungsglied ausgebildet ist. Es ist eine Rastverbindung vorgesehen, und der Durchmesser der dortigen Spitze anschließend an einen Schaft ist etwas vergrößert.

Diese Lösung erlaubt zwar die Ausübung von bedeutenden Kräften durch den Zahnarzt, und auch eine sichere Halterung der Spitze an dem Dental-Handwerkzeug im übrigen. Das dortige Kupplungsglied stellt andererseits ein Sackloch zur Verfügung, das tiefliegend und schlecht zu reinigen ist, so dass sich dort ohne regelmäßiges Autoklavieren bakterielle Verschmutzungen ansammeln.

Typischerweise werden Dental-Handwerkzeuge für unter anderem auch zum Stopfen und zum Modellieren von Füllungsmaterialien verwendet. Für das Stopfen ist es günstig, eine ballige relativ voluminöse Spitze zu verwenden, beispielsweise gemäß der US 6 206 698 A1. Demgegenüber ist für das Modellieren eine feinere Spitze günstig, um die erforderliche Präzision bereitstellen zu können. Zudem sind gerade bei Füllungen im Seitenzahnbereich von den Dental-Handinstrumenten höhere Scherkräfte, beispielsweise für die Gestaltung der Höckerabhänge, erforderlich. Hierzu hat sich die Verwendung von metallischen Modellierspitzen gemäß der vorstehend genannten US 4 552 531 A1 grundsätzlich bewährt, wobei allerdings je nach Härtungszustand des Dentalrestaurationteils die Modellierspitze teilweise mit dem Restaurationsmaterial verklebt.

Um diesen beiden unterschiedlichen Forderungen Rechnung zu tragen, werden typischerweise in der Zahnarztpraxis mindestens zwei verschiedene Arten von Dental-Handwerkzeugen bereitgehalten, und zu dem je in unterschiedlichen Ausgestaltungen. Demgegenüber liegt der Erfindung die Aufgabe zugrunde, ein Dental-Handwerkzeug gemäß dem Oberbegriff von Anspruch 1 zu schaffen, das universeller verwendbar ist, insbesondere sowohl für das Modellieren als auch für modelliernahe Tätigkeiten des Zahnarztes, leichter handzuhaben ist, aber dennoch keinen hygienischen Bedenken begegnet.

Diese Aufgabe wird erfindungsgemäß durch Anspruch 1 gelöst. Vorteilhafte Weiterbildungen ergeben sich aus der Unteransprüchen.

Erfindungsgemäß ist es vorgesehen, dass ein Dental-Handwerkzeug eine Modellierspitze aufweist, die überwiegend aus einem harten Material wie einem harten Kunststoff besteht. Der vordere Bereich der Modellierspitze ist mit einer Beschichtung versehen, die gegenüber dem Kern der Modellierspitze weicher ist. Im Bereich der Beschichtung ist die Ausgestaltung ballig, und bevorzugt ragt der Kern mit seinem vorderen Ende aus der Modellierspitze heraus.

Hierdurch lässt sich über seitliche Druckausübung im Bereich der Beschichtung eine Stopfwirkung erzielen. Das kurze herausragende Ende des Kerns erlaubt ein feines modellieren und ziselieren. Besonders bevorzugt ist die Beschichtung als Elastomer ausgebildet, das eine geringe Oberflächenenergie,eine geringe Benetzneigung sowie sehr gute Antihaft-Eigenschaften aufweist.

Bevorzugt ist die Modellierspitze als Zwei-Komponenten-Teil aufgebaut, der einen steifen Kern aus einem harten Trägerkunststoff mit einer im wesentlichen gleichmäßig dünnen Schicht aus einem dehäsiven Elastomer kombiniert.
Das Material der Beschichtung ist so ausgewählt, dass es eine besonders geringe Oberflächenenergie aufweist. Diese beträgt bevorzugt weniger als 35 mN/m. Das Material ist bevorzugt so ausgewählt, dass die Benetzungsneigung ausgesprochen gering ist. Zu den geeigneten Materialien gehören insofern Elastomere, Silikone, PTFE, aber auch beispielsweise ein Polyolefin. Wenn als Material für die Beschichtung ein geschäumtes Material verwendet wird, ist es bevorzugt, einen geschlossenporigen Schaum zu verwenden. Die Oberflächenschicht des Schaums kann auch nachverdichtet sein, so dass sie blasenfrei ist.

Eine Ausgestaltung mit einer besonders nachgiebigen Beschichtung, gepaart mit einer feinen Kernspitze, ist überraschend besonders günstig, wenn es gilt, sowohl Modellieraufgaben als auch Füllungaufgaben mit der gleichen Modellierspitze zu bewältigen.

Die Schichtstärke der Beschichtung kann beispielsweise 0,15 bis 0,25mm betragen. Sie ist gleichmäßig, nimmt jedoch an dem vorderen Ende ab.

Der Kern ragt um etwa 0,25 bis 0,75, bevorzugt um 0,5mm aus der Beschichtung vorne heraus. Dies ermöglicht ein präzises Modellieren gerade auch von Dentalmaterialien aus Komposit.

Überraschend erlaubt diese Ausgestaltung es, das Anhaften der Modellierspitze am Komposit zu verhindern, obwohl ein - wenn auch geringer - Kontakt zwischen dem Kern der Spitze und dem Komposit vorliegt.

Die geringe Schichtstärke der Beschichtung erlaubt zudem die gute Wiedergabe der entstehenden Scherkräfte, so dass sich auch sehr filigrane anatomische Zahnstrukturen gestalten lassen.

Die erfindungsgemäße Beschichtung ist nicht auf die Verwendung von Elastomeren beschränkt. Anstelle dessen lässt sich beispielsweise auch eine Beschichtung aus Polytetraflurethylen einsetzen, oder eine Beschichtung aus einem beliebigen anderen Material, das deutlich weicher als das Material des Kerns ist.

So ist es beispielsweise auch möglich, die Beschichtung im wesentlichen aus einem geschlossenporigen Schaum zu erstellen, dessen Außenfläche insbesondere geglättet ist, beispielsweise durch Wärmeeinwirkung.

Besonders günstig ist es, wenn ein Anschlussteil des Dental-Handwerkzeugs für die Verbindung mit einem besonderen Kupplungsglied bereitgestellt wird. Das Anschlussteil kann dann zwei zueinander entgegengesetzte Abkröpfungen umfassen. Das Kupplungsglied erstreckt sich bevorzugt so, dass sich ein Winkel von etwa 90 Grad zum letzten Abschnitt des Anschlussteils zum Kupplungsglied hin erstreckt. Hierzu weist das Kupplungsglied einen Ring auf, der den Schaft der Modellierspitze aufnimmt und von diesem durchtreten wird.

Bevorzugt sind eine Erstabkröpfung, eine Zweitabkröpfung und eine Drittabkröpfung vorgesehen. Deren Kröpfungswinkel sind zueinander entgegengesetzt. Bevorzugt ist der Drittabkröpfungswinkel vergleichsweise groß, z.B. über 60 Grad. Der letzte kurze Abschnitt des Anschlussteils jenseits der Drittabkröpfung kann sich quer zum Ring des Kupplungsglieds erstrecken - oder in Verlängerung deren Fläche -, so dass auch ein starke Gesamtabkröpfung möglich ist, wie sie besonders bei Arbeiten an distalen Bereichen von Molaren günstig ist.

Dies erlaubt es nicht nur, die Modellierspitze sicher zu entnehmen, und zwar durch Druck auf den rückwärtigen Bereich des Schafts, sondern auch eine verschmutzungsarme und leicht zu reinigende Realisierung des Kupplungsglieds. Ein derartiges Kupplungsglied lässt sich wesentlich leichter reinigen und sterilisieren als ein Sackloch.

Darüberhinaus ist diese Ausgestaltung praktisch eine Voraussetzung für die Realisierung der Modellierspitze mit einer Antihaft-Beschichtung. Eine Modellierspitze mit einer Antihaft-Beschichtung lässt mit nahezu nicht ausziehen, hingegen wohl aus dem Kupplungsglied herausdrücken. Durch die Nachgiebigkeit der Beschichtung, gepaart mit deren glatter Oberfläche, entsteht eine deutlich Reduktion des Haftreibungskoeffizienten, was zu der erwünschten Wirkung führt, dass das bearbeitete Komposit dort nicht anhaftet.

Alternativ kann der Anschlag auch in beliebigen anderen Weise ausgebildet sein. Eine punktuelle Anlage an z.B. zwei oder 3 einander gegenüberliegenden Punkten ist ebenso möglich wie eine konische Aufnahme mit Klemmpressung, oder auch eine Rastverbindung. Die Rastverbindung kann z.B. durch flache Retentionsvorsprünge realisiert werden, die auf dem Schaft ausgebildet sind, jenseits des vorderen Bereichs, und von hinten an dem Ring des Kupplungsglieds anliegen. Beim Eindrücken der Modellierspitze in den Ring verformen sich diese Rastvorsprünge leicht. Durch die federbelastete Anlage an der Rückfläche des Ringes entsteht eine Vorspannung, die die Modellierspitze sicher im Ring fixiert.

Dennoch ist sie durch Druck von hinten auf den Schaft leicht entnehmbar. Bevorzugt ist die Kraft, die für das Lösen der Verbindung zwischen dem Kupplungsglied und der Modellierspitze erforderlich ist, erheblich, z.B. mind. 50 N.

Der Schaft der Modellierspitze ist bevorzugt mit Klemmstegen versehen, die in einer geeigneten Anzahl gleichmäßig um den Umfang des Schafts verteilt sind, Alternativ können auch Noppen vorgesehen sein, die zB. auch in entsprechende Vertiefungen im Ring gehalten sein können.

Insofern ergibt sich mit der Erfindung der überraschende Vorteil, dass trotz der Möglichkeit, auch anspruchsvolle anatomische Strukturen erstellen zu können, die Haftung auch gegenüber Komposits ausgesprochen gering ist. Überraschend wird diese auch nicht durch die herausragende Kernspitze erhöht.

Ein erfindungsgemäß besonderer Vorteil liegt darin begründet, dass die erfindungsgemäße Modellierspitze das Kupplungsglied durchtritt: Der herausragende Schaft erlaubt im Gegensatz zum Stand der Technik das Ausüben von Druck auf diesen, so dass eine leichte Entnahme möglich ist. Dies erlaubt es erst mit Komponenten mit einem sehr geringen Gleitreibungskoeffizienten zu arbeiten. Die bisher verwendeten Kupplungsglieder mit Sackloch verlangen das Herausziehen von Modellierspitzen, was jedoch durch eine Oberfläche mit geringem Reibungskoeffizienten deutlich erschwert wird. Die erfindungsgemäße Lösung ist demgegenüber hiervon unabhängig.

Dies erlaubt es andererseits, die Festigkeit der Lagerung der Modellierspitze im Kupplungsglied noch zu erhöhen, was der Neigung der Modellierspitzen, bei der Betätigung und bei den aufgewendeten Scherkräften verloren zu gehen, entgegenwirkt.

Besonders bevorzugt ist es, dass die Modellierspitze einen Kern aufweist, der die Beschichtung durchtritt und an seinem vorderen Ende frei von der Beschichtung ist. Es ist aber auch möglich, die Beschichtung lediglich teilumlaufend hervorzusehen, so dass ein Steg verbleibt, der frei von einer Beschichtung ist und sich vom vorderen Ende der Modellierspitze rückwärts bis zum Flansch erstreckt.

Eine derartige Lösung ist besonders für die Realisierung mit der Spritzgusstechnik geeignet; der Anspritzpunkt kann dann weiter in den rückwärtigen Bereich hinein verlagert werden, so dass das vordere Ende der Modellierspitze frei von Anspritzpunkten ist.

Es versteht sich, dass anstelle der Spritzgusstechnik auch beliebige andere geeignete Herstellmöglichkeiten verwendet werden können. So lässt sich die Modellierspitze auch in einem Pressprozess herstellen, und es ist auch möglich, die Beschichtung bzw. gegebenenfalls weitere Schichten nach Belieben des Fachmanns in einem Tauchprozess oder auch in einem Lackierprozess zu realisieren.

Weitere Einzelheiten, Vorteile und Merkmale ergeben sich aus der nachfolgenden Beschreibung mehrerer Ausführungsbeispiele anhand der Zeichnung.
Es zeigen:
- Fig. 1: eine schematische Ansicht eines erfindungsgemäßen Dental-Handwerkszeugs, in perspektivischer Darstellung;
- Fig. 2: das Kupplungsglied als Detail aus Fig. 1;
- Fig. 3: eine Seitenansicht einer erfindungsgemäßen Modellierspitze in einer Ausführungsform;
- Fig. 4: die Modellierspitze gemäß Fig. 3, jedoch in Schnittdarstellung;
- Fig. 5: eine perspektivische Ansicht einer erfindungsgemäßen Modellierspitze;
- Fig. 6: eine Seitenansicht einer weiteren Ausführungsform einer erfindungsgemäßen Modellierspitze; und
- Fig. 7: die Schnittansicht durch die Modellierspitze gemäß Fig. 6;
- Fig. 8: eine schematische Schnittansicht einer weiteren Ausführungsform einer erfindungsgemäßen Modellierspitze;
- Fig. 9: eine Draufsicht auf die Modellierspitze in der Ausführungsform gemäß Fig. 8;
- Fig. 10: eine erläuterungshalber beigefügte Schnittansicht einer Modellierspitze, die keine Ausführungsform der Erfindung zeigt; und
- Fig. 11: eine erläuterungshalber beigefügte Draufsicht auf die Modellierspitze gemäß Fig. 10, wobei der Schnitt gemäß Fig. 10 entlang A-A erfolgt ist.

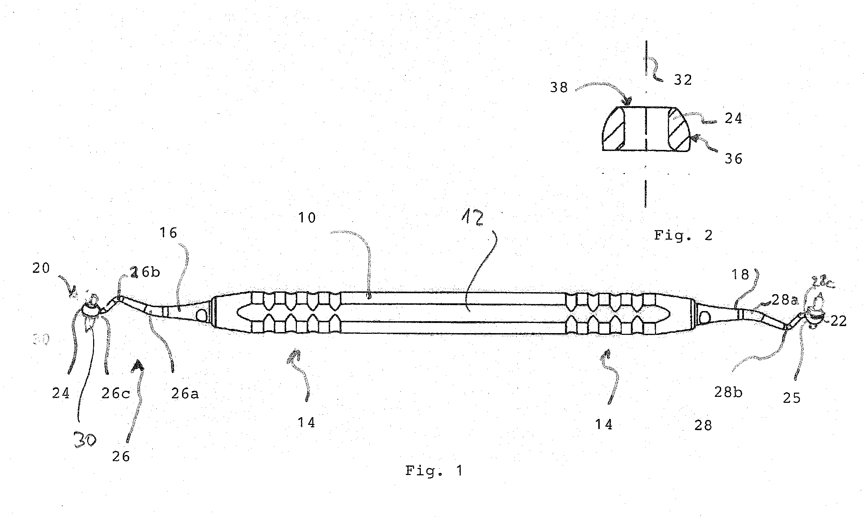

Das in Fig. 1 dargestellte Dental-Handwerkzeug 10 weist einen Griff 12 auf, der in an sich bekannter Weise teilweise eine Riffelung 14 trägt. Diese dient der besseren Greifbarkeit und dementsprechend Handhabung.

Das Dental-Handwerkzeug 10 ist in dem dargestellten Ausführungsbeispiel beidseitig ausgebildet, so dass sich von dem Griff 12 zwei Anschlussteile 16 und 18 endseitig wegerstrecken. An diesen angeschlossen ist je ein Kupplungsglied 20 beziehungsweise 22. Dieses weist je einen Ring 24 beziehungsweise 25 auf. Insofern liegt eine im Grunde mittensymetrische Ausgestaltung vor, wobei die Anschlussteile 16 und 18 je Abkröpfungen 26 und 28 aufweisen, die voneinander etwas verschieden sind.

Derartige unterschiedliche Apkröpfungen sind an sich bekannt, und dienen dazu, die Ergonomie bei Betätigung an schlecht zugänglichen Stellen im Mundraum des Patienten zu verbessern.

Die Anschlussteile 16 und 18 weisen über ihren Verlauf betrachtet einen im wesentlichen leicht konischen Aufbau auf. Die Abkröpfungen an jedem Anschlussteil sind zueinander - in jedenfalls bekannter Weise - entgegengesetzt gerichtet.

Die Erstabkröpfung 26a verläuft in dem dargestellten Ausführungsbeispiel in der Zeichnung in einem Winkel von etwa 25 Grad nach oben. Die Zweitabkröpfung 26b verläuft in die entgegengesetzte Richtung erneut um 75 Grad abgewinkelt, also nach unten. Unmittelbar angrenzend an das Kupplungsglied 20 ist eine Drittabkröpfüng 26c vorgesehen, die wiederum in einem Winkel von etwa 73,5 Grad zum sich hieran anschließenden Anschlussteil verläuft, und wiederum nach oben. Der resultierende Anstellwinkel beträgt damit 113,5 Grad, bezogen auf den Winkel zwischen der Längsachse des Griffs 12 und der Modellierspitzen-Längsachse 32.

Es versteht sich, dass die genannten Winkel lediglich beispielhaft zu verstehen sind. Für die Erfindung wesentlich ist jedoch die recht starke Abkröpfung des Rings 24 beziehungsweise 25 gegenüber dem Anschlussteil - hier beispielsweise im Winkel von 70 Grad -.

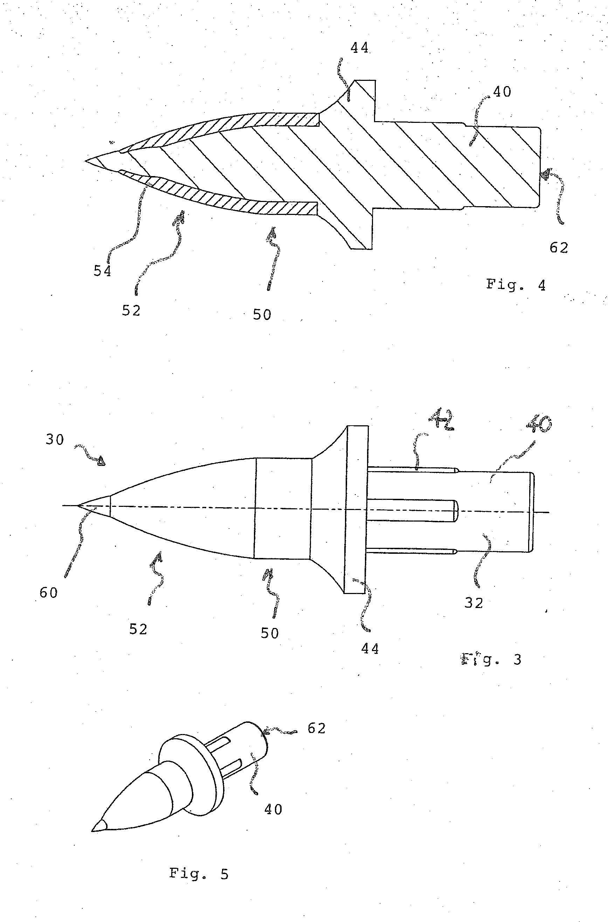

Der erfindungsgemäße Ring 24 beziehungsweise 25 ist dafür bestimmt, je eine Modellierspitze 30 aufzunemen, und zwar mit ihrem Schaft, wie es anhand von Fig. 3 näher erläutert ist.

Der Ring 24 ist in Fig. 2 vergrößert dargestellt. Er weist eine Achse 32 auf, die mit der Achse der Modellierspitze zusammenfällt und jedenfalls gegenüber dem Anschlussteil 16 deutlich schräg verläuft. Die Durchschnittsausnehmung 34 des Rings ist endseitig je mit Radien versehen. Eine derartige Ausgestaltung erleichtert die Reinigung und gegebenenfalls auch das Sterilisieren eines erfindungsgemäßen Dental-Handwerkzeugs, nachdem insbesondere keine unzugänglichen Innenecken zum Einsatz gelangen.

Der Ring 26 weist eine ballige Außenform 36 auf, die zum vorderen Ende 38 hin leicht konisch schräg zuläuft.

Aus Fig. 3 ist eine erfindungsgemäße Modellierspitze 30 in beispielhafter Ausgestaltung ersichtlich. Ein Schaft 40 ist dafür bestimmt, % in der Durchtrittsausnehmung 34 des Rings 24 aufgenommen zu werden. Zur Verbesserung der Lagerung sind 4 sich parallel erstreckende Klemmstege 42 vorgesehen. Diese sind für die Anlage innen an dem Ring 24 bestimmt und verbessern die Auszugssicherheit.

Anschließend an den Schaft 40 ist ein Flansch 44 vorgesehen, dessen Außendurchmesser im wesentlichen dem Außendurchmesser des Rings 24 an dem vorderen Ende 38 entspricht. Der Flansch 44 verjüngt sich nach vorne hin. Hieran anschließend ist ein zylindrischer Bereich 50 ausgebildet, der vergleichsweise kurz ist, beispielsweise zwischen der Hälfte und dem Einfachen eines Schaftdurchmessers beträgt.

Anstelle eines kreisförmigen Flansches ist es auch möglich, eine beliebige andere Geometrik auszubilden, die als Anschlag geeignet ist. Beispielsweise ist eine Stiftanordnung aus einem oder mehreren Stiften hierfür geeignet, die einer translatorischen Bewegung der Modellierspitze 30 entgegenwirkt. Alternativ kann auch ein Konus mit einem entsprechendem Gegenkonus ausgebildet sein, der ebenfalls für die Ausbildung eines Anschlags geeignet ist.

Anschließend an den zylindrischen Bereich 50 ist ein vorderer Bereich 52 der Modellierspitze 30 vorgesehen.

Sowohl der vordere Bereich 52 als auch der zylindrische Bereich 50 sind erfindungsgemäß von einer Beschichtung 54 abgedeckt, wozu auf Fig. 4 zu verweisen ist. Die Beschichtung 54 besteht aus einem Material mit größerer Nachgiebigkeit und ausgesprochen geringem Haftreibungskoeffizienten. Hier können Elastomere, aber auch Beschichtungen aus anderen geeigneten Kunststoffen wie beispielsweise Polyethylen oder Polytetraflurethylen zum Einsatz gelangen.

Demgegenüber ist das Material der Modellierspitze 30 im übrigen härter. Es bildet gegenüber der Beschichtung insofern einen Kern 56.

Der Kern 56 endet in einer Kernspitze 60, die die Beschichtung 54 - und damit den vorderen Bereich 52 - durchtritt. Die Kernspitze 60 ist konisch ausgebildet und endet in einem kleinen Radius, der beispielsweise zwischen 0,01 und 0,1mm betragen kann.

Während der vordere Bereich 52 - und teilweise auch der zylindrische Bereich 54 bei der Handhabung besonders geeignet sind, das aufgebrachte Material anzudrücken und ihm gegebenenfalls eine geglättete Oberfläche zu geben, dient die Kernspitze (60) zur Schaffung auch anspruchsvoller anatomischer Strukturen.

Es versteht sich, dass beidseitig des erfindungsgemäßen Dental-Handwerkzeugs 10 auch Modellierspitzen 30 mit unterschiedlichen Kernspitzen eingesetzt werden können; so könnte beispielsweise die weitere Kernspitze einen Endradius von beispielsweise 1mm haben, und dementsprechend eine Glättungsfunktion aufweisen.

Aus Fig. 4 ist ersichtilich, dass die Schichtstärke der Beschichtung 54 nach vorne hin abnimmt. Die Abnahme der Schichtstärke geht einher mit einer Reduktion des Durchmessers der Modellierspitze. An der Stelle, an der die Modellierspitze weniger formstabil ist, ist auch die Beschichtung weniger stark, so dass die Reduktion der Nachgiebigkeit der Beschichtung durch die Reduktion der Formstabilität kompensiert wird.

Aus Fig. 5 ist ersichtlich, in welcher Weise eine Modellierspitze in perspektivischer Darstellung ersichtlich ist. Das rückwärtige Ende 62 des Schafts 40 ist stumpf, und über dieses lässt sich die Modellierspitze 30 ohne weiteres aus dem Ring 24 herausdrücken.

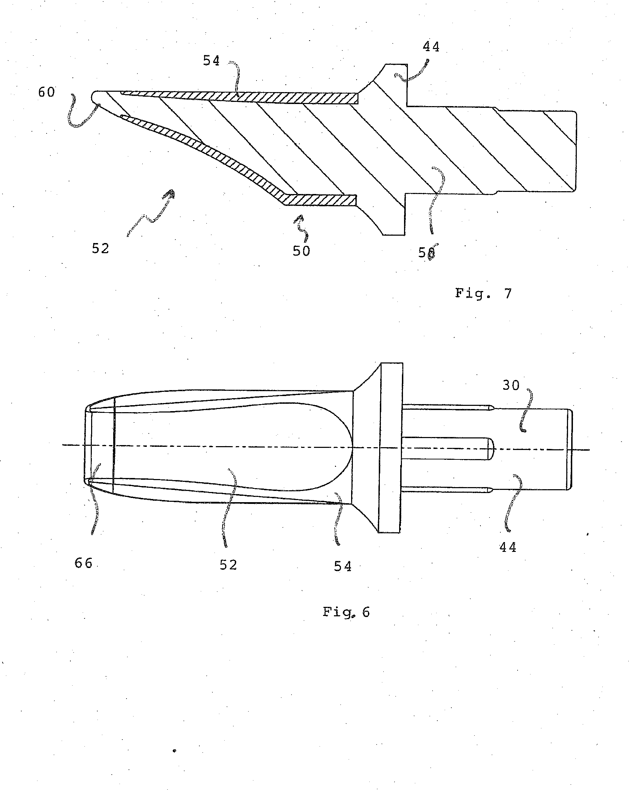

Aus Fig. 6 und 7 ist beispielhaft ersichtlich, in welcher Weise eine erfindungsgemäße Modellierspitze auch gestaltet sein kann. Die Grundform dieser Modellierspitze 30 ist meißelartig oder spatelartig und nicht kreis-symetrisch. Die Kernspitze 60 ragt wiederum aus der Beschichtung 54 heraus. Die Kernspitze 60 bildet hier eine flache Klinge 66, die in bestimmten Anwendungsfällen für das Modellieren besonders gut geeignet ist.

Hier wie auch in den weiteren Figuren weisen gleiche Bezugszeichen auf gleiche Teile hin und bedürfen keiner zusätzlichen Erläuterung.

Er versteht sich, dass sich auch bei der Ausführungsform gemäß den Figuren 6 und 7 die Beschichtung im vorderen Bereich 52 und auch im zylindrischen Bereich 50 - der hier gegebenenfalls eine Abflachung aufweisen kann - ringsum erstreckt, so dass dort der Kern 56 vor Materialkontakt geschützt ist.

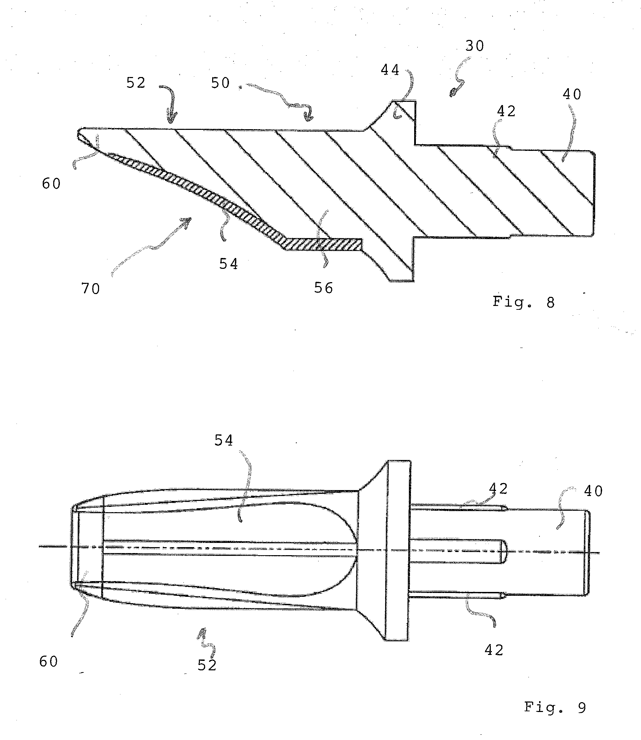

Fig. 8 zeigt eine Schnittansicht durch eine weitere beispielhafte Ausführungsform einer erfindungsgemäßen Modellierspitze 30. Diese Ausführungsform weist einen Schaft 40 auf, der mit Klemmstegen 42 versehen ist. Anschließend an diesen nach vorne hin erstreckt sich ein Flansch 44, der wiederum kreisförmig umlaufend ausgebildet ist. Es ist ein zylindrischer Bereich 50 vorgesehen, an den sich nach vorne hin ein vorderer Bereich 52 der Modellierspitze 30 anschließt. Der vordere Bereich 52 weist im wesentlichen eine Meißelform auf und ist insofern nicht kreisrund. Er läuft nach vorne spitz zu, wobei eine Kernspitze 60 sich weiter nach vorne hin erstreckt als eine Beschichtung 54.

Die Modellierspitze 30 besteht - abgesehen von der Beschichtung 54 - aus einem Kern 56, der aus einem Material besteht, das weicher oder härter ist als das Material der Beschichtung 54 ist.

Die Form der meißelförmigen Modellierspitze 30 gemäß Fig. 8 lässt sich auch gut aus dem Vergleich der Fig. 8 und 9 ersehen. Die Beschichtung 54 besteht (bei dieser Ausführungsform) entweder aus einem Elastomer oder z. B. aus Keramik oder Metall, während als Material für den Kern 56 ein geeignetes Kunststoffmaterial wie Polyamid oder Polypropylen, oder auch Polyethylen, eingesetzt wird.

Die Beschichtung 54 ist - wie aus Fig. 9 ersichtlich - über eine Seite des vorderen Bereichs 52 vorgesehen, und zwar über diejenige mit der Hohlkehle 70. Diese Seite wird vom Zahnarzt dann bevorzugt für die haftfreie Adaption verwendet, wobei die Hohlkehle 70 besonders gut für die Ausbildung balliger Ausgestaltungen einsetzbar ist.

Die Feinmodellation kann zur Darstellung zum Beispiel von Fissuren lässt sich wiederum mit der Kernspitze 60 realisieren.

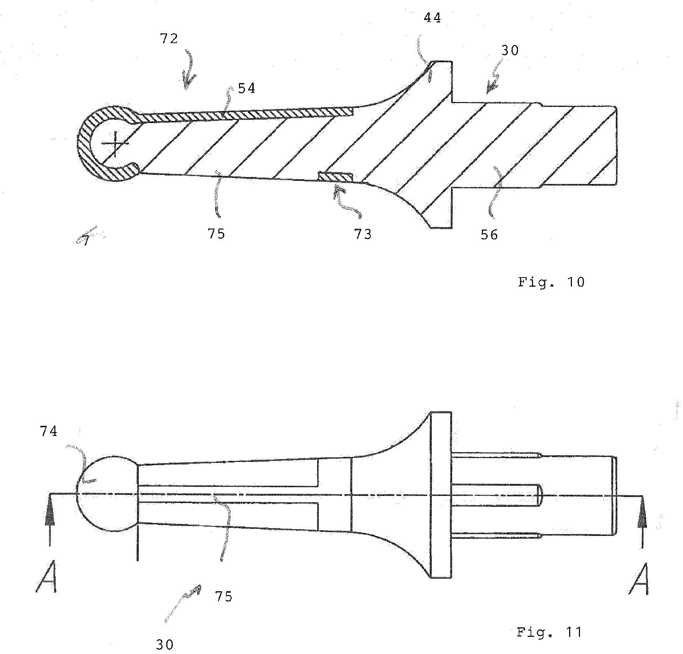

Eine weitere erläuterungshalber beigefügte Ausgestaltung eines Dental-Handwerkzeugs mit einer Modellierspitze 30 ist aus Fig. 10 und 11 ersichtlich. Bei dieser Ausgestaltung ist anschließend an den Flansch 44 ein im wesentlichen konischer Bereich 72 vorgesehen. Der konische Bereich 72 weist eine Beschichtung 54 auf. Die Beschichtung 54 erstreckt sich in einem Beschichtungsring 73 kreisförmig, jedoch anschließend an den Beschichtungsring (73) nach vorne hin lediglich teilkreisförmig. Der Teilkreiswinkel beträgt im dargestellten Ausführungsbeispiel etwa 20 Grad, und über den Rest zu 360 Grad, also über 340 Grad erstreckt sich ein Steg 75 aus dem Kernmaterial 56.

Anschließend an das vordere, verjüngte Ende des konischen Bereichs 72 ist eine Stopfkugel 74 vorgesehen. Diese ist vollständig von dem Elastomer-Material der Beschichtung 54 umgeben.

Diese Ausgestaltung einer Modellierspitze 30 ist besonders für die Verbindung mit einem Matritzenband günstig. Matritzenbänder werden für die Realisierung eher großvolumiger Dentalrestaurationen in an sich bekannterweise verwendet. Sie bestehen häufig aus Stahl wie Edelstahl.

Es ist nun vorgesehen, den Steg 75, der frei von Elastomer-Material ist, an dem Matritzenband entlang gleiten zu lassen, wenn der Kontaktpunkt an der Approximalfläche erstellt werden soll. Hierdurch ist sicher verhindert, dass sich Elastomerteile aufgrund des Kontaktes mit der scharfen Stahlkante des Matritzenbandes ablösen können.

Um dies auch bei der Ausfürungsform gemäß den Fig. 8 und 9 zu gewährleisten, kann es vorgesehen sein, die Beschichtung 54 aus einem Hartmaterial zu realisieren, dessen Nachgiebigkeit geringer als die Nachgiebigkeit des Materials des Kerns 76 ist. Bei der meißelförmigen Modellierspitze gemäß Fig. 8 und 9 kann dann die hohlkelige Rückseite für das Geleiten an dem Matritzenband bei der Füllung von Kavitäten der Klasse 2 eingesetzt werden.

## Patentansprüche

1. Dental-Handwerkzeug, mit einem Griff (12) mit mindestens einem Anschlussteil (16) und einem Kupplungsglied (20) an einem Ende, und einem zweiten Anschlussteil (18) und einem zweiten Kupplungsglied (22) an dem anderen Ende des Griffs (12), wobei eine einen Schaft aufweisende Modellierspitze (30) passend zu dem Kupplungsglied vorgesehen ist, und dass die Modellierspitze (30) eine Beschichtung (54) aus einem Material aufweist, das gegenüber dem Material der Modellierspitze (30) im Übrigen nachgiebiger ist,
wobei das Material der Beschichtung eine gegenüber dem Material der Modellierspitze geringere Oberflächenenergie von weniger als 35mN/m aufweist, **dadurch gekennzeichnet, dass** die Modellierspitze (30) einen Kern aufweist, der in einer Kernspitze, welche die Beschichtung und damit ein vorderer Bereich (52) der Modellierspitze (30) durchtritt, endet und an seinem vorderen Ende frei von der Beschichtung (54) ist, und wobei die Schichtstärke der Beschichtung (54) nach vorne abnimmt.

2. Dental-Handwerkzeug nach Anspruch 1, **dadurch gekennzeichnet, dass** das Anschlussteil (16,18), vom Griff zum Kupplungsglied (20; 22) hin betrachtet, je konisch zulaufend oder sich verjüngend ist, mindestens über einen Teil der Länge und über mehr als die Hälfte der Länge.

3. Dental-Handwerkzeug nach einem der vorhergehenden Ansprüche, **dadurch gekennzeichnet, dass** das Kupplungsglied als Ring (24) ausgebildet ist, der sich mit seiner Normalen quer zur Achse (32) des Anschlussteils (16) erstreckt.

4. Dental-Handwerkzeug nach Anspruch 3, **dadurch gekennzeichnet, dass** Ringe als Kupplungsglieder (20,22) an den beiden Enden des Dental-Handwerkzeugs zueinander unterschiedliche Kröpfungswinkel und/oder unterschiedliche Geometrien der Anschlussteile und/oder zueinander gleiche Kröpfungswinkel und unterschiedliche Modellierspitzen (30) aufweisen.

5. Dental-Handwerkzeug nach einem der vorhergehenden Ansprüche, **dadurch gekennzeichnet, dass** das Anschlussteil (16; 18) mindestens zwei Kröpfungen aufweist, die in der Abfolge betrachtet, im Winkel gegeneinander gerichtet sind, wobei die dem Kupplungswinkel benachbarte Kröpfung so ausgerichtet ist, dass der Winkel zwischen der von dem Kupplungsglied (20,22) aufgespannten Fläche und dem benachbarten Anschlüssteil (16;18) weniger als 90 Grad beträgt.

6. Dental-Hahdwerkzeug nach einem der vorhergehenden Ansprüche, **dadurch gekennzeichnet, dass** die Modellierspitze (30) mit ihrem Schaft (40) einen Ring (24) des Kupplungsglieds (20; 22) durchtritt und durch Drücken auf das rückwärtige Ende des Schafts (40) aus dem Kupplungsglied (20; 22) entfernbar ist.

7. Dental-Handwerkzeug nach einem der vorhergehenden Ansprüche, **dadurch gekennzeichnet, dass** ein Schaft der Modellierspitze (30) Retentionsvorsprünge oder Klemmstege (42) aufweist, die für die Anlage an einem Ring (24) des Kupplungsglieds (20; 22) bestimmt sind.

8. Dental-Handwerkzeug nach Anspruch 7, **dadurch gekennzeichnet, dass** die Klemmstege (42) des Schafts (40) in Presspassung an einem Ring (24) des Kupplungsglieds (20; 22) anliegen und die Klemmstege (24) und/oder der Schaft (40) sich in gekuppeltem Zustand verformen, oder dass der Schaft (40) konisch ausgebildet ist und der Ring (24) einen hierzu passenden Gegenkonus aufweist.

9. Dental-Handwerkzeug nach einem der vorhergehenden Ansprüche, **dadurch gekennzeichnet, dass** die Modellierspitze (30) einen oder mehrere Vorsprünge, die in Form eines Flansches (44) ausgebildet sind, aufweist, welcher Flansch (44) kreisförmig umlaufend ausgebildet und welche Vorsprünge für die Anlage an einem Ring (24; 26) des Kupplungsglieds (20; 22) bestimmt ist.

10. Dental-Handwerkzeug nach einem der vorhergehenden Ansprüche, **dadurch gekennzeichnet, dass** die Modellierspitze (30) einen oder mehrere Vorsprünge, die in Form eines Flansches (44) oder vorragender Stifte ausgebildet sind, aufweist, welche Vorsprünge einen vorderen Bereich von einem Schaft (40) der Modellierspitze (30) etwa mittig oder so trennt, dass der vordere Bereich der Modellierspitze (30) weiter vorspringt als der Schaft (40), und/oder ein Flansch (44) der Modellierspitze (30) zum vorderen Ende der Modellierspitze (30) hin konisch zuläuft und/oder ein Flansch (44) der Modellierspitze (30) sich bündig zu dem Ring (24; 26) des Kupplungsglieds (20; 22) erstreckt.

11. Dental-Handwerkzeug nach einem der vorhergehenden Ansprüche, **dadurch gekennzeichnet, dass** die Beschichtung (54) der Modellierspitze (30) sich über einen Teilbereich der Länge der Modellierspitze (30) erstreckt und/oder der Kern (56) der Modellierspitze (30) über einen großen Teil des vorderen Bereichs (50) der Beschichtung (54) abgedeckt ist.

12. Dental-Handwerkzeug nach einem der vorhergehenden Ansprüche, **dadurch gekennzeichnet, dass** die Beschichtung (54) nach der Art einer Hülse auf der Modellierspitze (30) aufgebracht ist und ein Kern (56) der Modellierspitze (30) die Hülse durchtritt und/oder die Beschichtung (54) sich bündig auf dem Kern (56) der Modellierspitze (30), mit stetigen Übergängen an Ihren Enden erstreckt und/oder die Beschichtung (54) in einem Aufnahmebereich des Kerns (56) der Modellierspitze (30) aufgenommen ist, der, im Schnitt der Modellierspitze (30) betrachtet, eingesenkt ist.

13. Dental-Handwerkzeug nach einem der vorhergehenden Ansprüche, **dadurch gekennzeichnet, dass** ein Aufnahmebereich für die Beschichtung auf der Modellierspitze (30) zum vorderen Ende der Modellierspitze (30) konisch zuläuft und/oder dass die Beschichtung (54) der Modellierspitze (30) sich über einen zylindrischen Bereich (50) der Modellierspitze (30) erstreckt, der einem Flansch (44) der Modellierspitze (30) benachbart ist und/oder dass die Beschichtung (54) sich über einen konischen Bereich des vorderen Bereichs (50) der Modellierspitze (30) erstreckt, und an einem Kern (56) der Modellierspitze anliegt.

14. Dental-Handwerkzeug nach Anspruch 13, **dadurch gekennzeichnet, dass** die Beschichtung (54) über einen überwiegenden Teil ihrer Länge eine gleichbleibende Dicke aufweist und nach vorne hin konisch zuläuft.

15. Dental-Handwerkzeug nach einem der vorhergehenden Ansprüche, **dadurch gekennzeichnet, dass** eine Beschichtung (54) sich mindestens teilringförmig mit einem Umschlingungswinkel von mehr als 270 Grad um einen vorderen Bereich (52) eines Kerns (56) der Modellierspitze (30) erstreckt und die Modellierspitze (30) einen Steg (75) aufweist, der sich bündig mit der Beschichtung (54) im Übrigen längs des vorderen Bereichs (52) erstreckt.

## Claims

1. A handheld dental tool, comprising a handle (12) with at least one connecting part (16) and a coupling member (20) at one end, and a second connecting part (18) and a second coupling member (22) at the other end of the handle (12), wherein a modelling tip (30) having a shank is provided to fit the coupling member, and that the modelling tip (30) has a coating (54) of a material which otherwise is more flexible with respect to the material of the modelling tip (30),
wherein the material of the coating has a surface energy of less than 35mN/m with respect to the material of the modelling tip,
**characterized in that** the modelling tip (30) comprises a core which terminates in a core tip and which passes through the coating and hence a front region (52) of the modelling tip (30) and, at the front end thereof, is free of the coating (54),
and wherein the layer thickness of the coating (54) decreases towards the front.

2. The handheld dental tool according to claim 1, **characterized in that** the connecting part (16, 18), as viewed from the handle towards the coupling member (20; 22), is each conically tapered or tapered at least across part of the length and across more than half of the length.

3. The handheld dental tool according to one of the preceding claims, **characterized in that** the coupling member is formed as a ring (24) which, with its normal, extends to the axis (32) of the connecting part (16).

4. The handheld dental tool according to claim 3, **characterized in that** rings, as coupling members (20, 22), have mutually different crank angles and/or different geometries of the connecting parts and/or mutually identical crank angles and different modelling tips (30), at the two ends of the handheld dental tool.

5. The handheld dental tool according to one of the preceding claims, **characterized in that** the connecting part (16; 18) has at least two cranks which, as viewed one after another, are directed at an angle towards each another, the crank adjacent to the coupling angle being aligned such that the angle between the surface spanned by the coupling member (20, 22) and the adjacent connecting part (16; 18) is less than 90 degrees.

6. The handheld dental tool according to one of the preceding claims, **characterized in that** the modelling tip (30) passes through a ring (24) of the coupling member (20; 22) with its shank (40) and can be removed from the coupling member (20; 22) by pressing on the rear end of the shank (40).

7. The handheld dental tool according to one of the preceding claims, **characterized in that** a shank of the modelling tip (30) has retention projections or clamping webs (42) which are intended to bear against a ring (24) of the coupling member (20; 22).

8. The handheld dental tool according to claim 7, **characterized in that** the clamping webs (42) of the shank (40), when in press fit, bear against a ring (24) of the coupling member (20; 22) and the clamping webs (42) and/or the shank (40) deform in the coupled state, or **in that** the shank (40) is conical formed and the ring (24) comprising a matching counter-cone.

9. The handheld dental tool according to one of the preceding claims, **characterized in that** the modelling tip (30) comprises one or more projections which are in the form of a flange (44), which flange (44) is of circular circumferential design and which projections are intended to bear against a ring (24; 26) of the coupling member (20; 22).

10. The handheld dental tool according to one of the preceding claims, **characterized in that** the modelling tip (30) comprises one or more projections which are in the form of a flange (44) or projecting pins, which projections separate a front region from a shank (40) of the modelling tip (30) approximately centrally or such, that the front region of the modelling tip (30) projects further than the shank (40), and/or a flange (44) of the modelling tip (30) conically tapers towards the front end of the modelling tip (30) and/or a flange (44) of the modelling tip (30) is flush to the ring (24); 26) of the coupling member (20; 22).

11. The handheld dental tool according to one of the preceding claims, **characterized in that** the coating (54) of the modelling tip (30) extends across a partial region of the length of the modelling tip (30) and/or the core (56) of the modelling tip (30) is covered across a large portion of the front region (50) of the coating (54).

12. The handheld dental tool according to one of the preceding claims, **characterized in that** the coating (54) is applied to the modelling tip (30) in the manner of a sleeve, and a core (56) of the modelling tip (30) passes through the sleeve and/or the coating (54) is applied flush on the core (56) of the modelling tip (30) and has continuous transitions at its ends and/or the coating (54) is received in a receiving region of the core (56) of the modelling tip (30), which is recessed, when viewed in section of the modelling tip (30).

13. The handheld dental tool according to one of the preceding claims, **characterized in that** a receiving region, for the coating on the modelling tip (30), conically tapers towards the front end of the modelling tip (30) and/or **in that** the coating (54) of the modelling tip (30) extends across a cylindrical region (50) of the modelling tip (30), which is adjacent to a flange (44) of the modelling tip (30), and/or **in that** the coating (54) extends across a conical region of the front region (50) of the modelling tip (30) and abuts a core (56) of the modelling tip.

14. The handheld dental tool according to claim 13, **characterized in that** the coating (54) has a constant thickness across a major part of its length and conically tapers towards the front.

15. The handheld dental tool according to one of the preceding claims, **characterized in that** a coating (54) at least in part annularly extends at an angle of wrap of more than 270 degrees around a front region (52) of a core (56) of the modelling tip (30) and the modelling tip (30) comprises a web (75) which extends flush to the coating (54) and additionally extends along the front region (52).

## Revendications

1. Outil à main dentaire, comprenant un manche (12) avec au moins une pièce de raccordement (16) et un élément d'accouplement (20) à une extrémité, et une deuxième pièce de raccordement (18) et un deuxième élément d'accouplement (22) à l'autre extrémité du manche (12), où une pointe de modelage (30) ayant une tige adaptée à l'élément d'accouplement est prévue, et en ce que la pointe de modelage (30) présente un revêtement (54) d'un matériau qui est au demeurant plus souple par rapport au matériau de la pointe de modelage (30),
où le matériau du revêtement présente une énergie superficielle inférieure à 35mN/m par rapport au matériau de la pointe de modelage,
**caractérisé en ce que** la pointe de modelage (30) comprend un noyau qui se termine par une pointe de noyau qui traverse le revêtement et ainsi une zone avant (52) de la pointe de modelage (30) et est exempte du revêtement (54) à son extrémité avant et où l'épaisseur de la couche de revêtement (54) diminue vers l'avant.

2. Outil à main dentaire selon la revendication 1, **caractérisé en ce que** la pièce de raccordement (16, 18), vue depuis la poignée vers l'élément d'accouplement (20; 22), est chacune conique ou effilée, au moins sur une partie de la longueur et sur plus de la moitié de la longueur.

3. Outil à main dentaire selon l'une des revendications précédentes, **caractérisé en ce que** l'élément d'accouplement est conçue comme une bague (24), qui s'étend avec sa normale transversalement à l'axe (32) de la pièce de raccordement (16).

4. Outil à main dentaire selon la revendication 3, **caractérisé en ce que** des anneaux en tant qu'éléments d'accouplement (20, 22) aux deux extrémités de l'outil à main dentaire présentent des angles de coudage différents les uns des autres et/ou des géométries différentes des pièces de raccordement et/ou des angles de coudage identiques les uns des autres et des pointes de modelage (30) différentes.

5. Outil à main dentaire selon l'une des revendications précédentes, **caractérisé en ce que** la pièce de raccordement (16 ; 18) présente au moins deux coudes qui, vus l'un après l'autre, sont orientés l'un vers l'autre en formant un angle, où le coude contigu à l'angle d'accouplement est orienté de telle manière que l'angle entre la surface tendue par l'élément d'accouplement (20, 22) et la pièce de raccordement contigüe (16 ; 18) est inférieur à 90 degrés.

6. Outil à main dentaire selon l'une des revendications précédentes, **caractérisé en ce que** la pointe de modelage (30) avec sa tige (40) passe à travers une bague (24) de l'élément de couplage (20 ; 22) et peut être retirée de l'élément de couplage (20 ; 22) en appuyant sur l'extrémité arrière de la tige (40).

7. Outil à main dentaire selon l'une des revendications précédentes, **caractérisé en ce qu'**une tige de la pointe de modelage (30) présente des saillies de retenue ou des nervures de serrage (42) qui sont prévues pour s'appuyer contre une bague (24) de l'élément d'accouplement (20 ; 22).

8. Outil à main dentaire selon la revendication 7, **caractérisé en ce que** les nervures de serrage (42) de la tige (40) s'appuient en ajustement serré contre une bague (24) de l'élément d'accouplement (20 ; 22) et les nervures de serrage (42) et/ou la tige (40) se déforment à l'état accouplé, ou **en ce que** la tige (40) est conçue conique et la bague (24) présente un contre-cône qui s'y adapte.

9. Outil à main dentaire selon l'une des revendications précédentes, **caractérisé en ce que** la pointe de modelage (30) présente une ou plusieurs saillies qui ont la forme d'une bride (44), laquelle bride (44) étant de conception circonférentielle circulaire et lesquelles saillies étant destinées à s'appuyer contre une bague (24 ; 26) de l'élément d'accouplement (20 ; 22).

10. Outil à main dentaire selon l'une des revendications précédentes, **caractérisé en ce que** la pointe de modelage (30) présente une ou plusieurs saillies qui sont conçues sous la forme d'une bride (44) ou de broches saillantes, lesquelles saillies séparent une zone avant d'une tige (40) de la pointe de modelage (30) de manière approximativement centrale, ou **en ce que** la partie avant de la pointe de modelage (30) dépasse la tige (40), et/ou une bride (44) de la pointe de modelage (30) se rétrécit de manière conique vers l'extrémité avant de la pointe de modelage (30) et/ou une bride (44) de la pointe de modelage (30) s'étend à fleur de l'anneau (24 ; 26) de l'élément d'accouplement (20 ; 22).

11. Outil à main dentaire selon l'une des revendications précédentes, **caractérisé en ce que** le revêtement (54) de la pointe de modelage (30) s'étend sur une zone partielle de la longueur de la pointe de modelage (30) et/ou le noyau (56) de la pointe de modelage (30) est recouvert sur une grande partie de la zone avant (50) du revêtement (54).

12. Outil à main dentaire selon l'une des revendications précédentes, **caractérisé en ce que** le revêtement (54) est appliqué sur la pointe de modelage (30) à la manière d'un manchon et un noyau (56) de la pointe de modelage (30) passe à travers le manchon et/ou le revêtement (54) s'étend à fleur sur le noyau (56) de la pointe de modelage (30), avec des transitions continues à ses extrémités et/ou le revêtement (54) est reçu dans une zone de réception du noyau (56) de la pointe de modelage (30), qui est enfoncée lorsqu'on la considère en coupe de la pointe de modelage (30).

13. Outil à main dentaire selon l'une des revendications précédentes, **caractérisé en ce qu'**une zone de réception pour le revêtement sur la pointe de modelage (30) se rétrécit de manière conique vers l'extrémité avant de la pointe de modelage (30) et/ou **en ce que** le revêtement (54) de la pointe de modelage (30) s'étend sur une zone cylindrique (50) de la pointe de modelage (30), qui est adjacent à une bride (44) de la pointe de modelage (30) et/ou que le revêtement (54) s'étend sur une zone conique de la zone avant (50) de la pointe de modelage (30) et s'appuie contre un noyau (56) de la pointe de modelage.

14. Outil à main dentaire selon la revendication 13, **caractérisé en ce que** le revêtement (54) présente une épaisseur constante sur une partie prédominante de sa longueur et se rétrécit de manière conique vers l'avant.

15. Outil à main dentaire selon l'une des revendications précédentes, **caractérisé en ce qu'**un revêtement (54) s'étend au moins en forme d'anneau partiel avec un angle d'enveloppement de plus de 270 degrés autour d'une zone avant (52) d'un noyau (56) de la pointe de modelage (30) et la pointe de modelage (30) présente une traverse (75) qui s'étend à fleur du revêtement (54) au demeurant le long de la zone avant (52).
